# EUROPEAN PATENT SPECIFICATION

(11) **EP 0 991 168 B1**
(45) Date of publication and mention of the grant of the patent: **03.12.2003**
(21) Application number: 99119212.1
(22) Date of filing: 28.09.1999
(51) Int. Cl.: H02K 49/04, H02K 49/02, B60L 7/28

(54) **Eddy current reduction apparatus**
Wirbelstrom-Bremsgerät
Ralentisseur à courant de Foucault

(30) Priority: 30.09.1998 JP 27732998
(43) Date of publication of application: 05.04.2000
(73) Proprietor: ISUZU MOTORS LIMITED, Shinagawa-ku, Tokyo (JP)
(72) Inventor: Kuwahara, Tohru, c/o Isuzu Motors Ltd., Kawasaki-shi, Kanagawa (JP)
(74) Representative: Niedmers, Ole, Dipl.-Phys.

(56) References cited:
- EP-A- 0 828 339
- PATENT ABSTRACTS OF JAPAN vol. 18, no. 263 (E-1550), 19 May 1994 (1994-05-19) -& JP 06 038504 A (ISUZU MOTORS LTD), 10 February 1994 (1994-02-10)
- PATENT ABSTRACTS OF JAPAN vol. 1995, no. 2, 31 March 1995 (1995-03-31) -& JP 06 319252 A (ISUZU MOTORS LTD ), 15 November 1994 (1994-11-15)
- PATENT ABSTRACTS OF JAPAN vol. 1996, no. 1, 31 January 1996 (1996-01-31) -& JP 07 245933 A (ISUZU MOTORS LTD), 19 September 1995 (1995-09-19)

## Description

The present invention relates to an eddy current reduction apparatus for alleviating a burden of a frictional brake for large sized vehicles or the like, and particularly to an eddy current reduction apparatus in which the magnetic flux of a permanent magnet (hereinafter referred to as a magnet) effectively exercises on a brake drum.

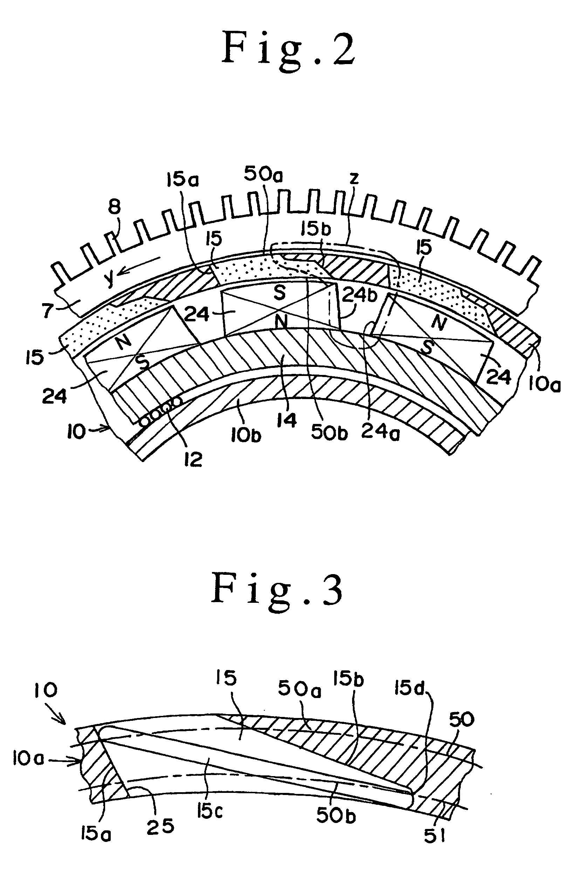

In a conventional eddy current reduction apparatus, the shape of a side section of a ferromagnetic plate is substantially rectangular, an area of an outer surface is substantially the same as that of an inner surface, and the magnetic flux from the magnet is not drawn or not squeezed by the ferromagnetic plates but enters a brake drum. So, if the shape of the side section of the ferromagnetic plate is shaped to a trapezoid, and the area of the outer surface is made to be narrower than that of the inner surface, it is possible to draw the magnetic flux entering the brake drum from the magnets by the ferromagnetic plates to make the magnetic flux density large, thus enhancing the brake force. However, in the aforementioned construction, the edge effect (concentrated effect of magnetic flux) of the outer surface of the ferromagnetic plates is hard to obtain, and it is difficult to cast the ferromagnetic plates into an outer tubular portion of a guide tube made of aluminum. Further, even if the guide tube is manufactured by forging, an allowance for machining of the outer peripheral surface and the inner peripheral surface of the outer tubular portion increases and the volume of the ferromagnetic plate decreases in consideration of leaving a parting line (see reference numeral in Fig. 3). Particularly, in an eddy current reduction apparatus in which an immovable magnet support tube and a movable magnet support tube are axially arranged in a hollow portion of a guide tube, when in non-braking in which a pair of left and right magnets of different polarities from each other are opposed to a common ferromagnetic plate, a leakage magnetic flux from the magnets exercises on the brake drum and a dragging torque is generated. Therefore, it is necessary to thicken the ferromagnetic plates and increase the volume in order to suppress the dragging torque, which is disadvantageous in terms of braking performance.

In an eddy current reduction apparatus in which a good conductor such as copper is coated or deposited on the opposite ends of a brake drum, if the plane of ferromagnetic plates has a rectangle in shape without roundness at corner portions, the brake force is enhanced. However, the whole periphery of the sides of the ferromagnetic plates has to be machined and the parting line is to be disapeared by machining, whereby even if the ferromagnetic plates are cast into the guide tube made of aluminum, the ferromagnetic plates are attracted or absorbed into the brake drum so that the ferromagnetic plates are possibly moved out of the guide tube. Further, the guide tube is greatly contracted at the time of cooling after the ferromagnetic plates have been cast into the guide tube made of aluminum, and cracks possibly occur in portions adjacent to corner portions of the ferromagnetic plates in the guide tube.

In the conventional eddy current reduction apparatuses disclosed in Japanese Patent Laid-Open Nos. 6-38504 and 6-38505 Publications or the like, the side section of ferromagnetic plates is shaped such that an outer surface of a rear portion in a rotational direction of a brake drum is protruded rearward, and a rear surface is inclined in a direction opposite to the rotational direction of the brake drum. The above-described construction is intended to disperse the magnetic fluxes from the magnets to the brake drum to enhance the braking performance. Recently, however, the distribution of magnetic field at high speed rotation of the brake drum can be measured, and as a result, it has been found that at the high speed rotation of the brake drum, the magnetic fluxes exerting or exercising on the brake drum are concentrated, rather than being dispersed, to make the magnetic flux density large so as to enhance the edge effect of the ferromagnetic plates, which can contribute to an increase in braking force.

### SUMMARY OF THE INVENTION

An object of the present invention is to provide an eddy current reduction apparatus in which at high speed rotation of a brake drum, magnetic fluxes exerting or exercising on a brake drum from magnets are concentrated to make the magnetic flux density large so as to enhance the edge effect of ferromagnetic plates and increase the braking force.

For solving the aforementioned problems, according to the present invention, there is provided an eddy current reduction apparatus in which a guide tube formed of a non-magnetic material and having a hollow portion in the shape of a rectangle in section is disposed interiorly of a brake drum connected to a rotational shaft, a number of ferromagnetic plates are disposed at peripherally equal intervals on an outer tubular portion of the guide tube, at least one of magnet support tube is disposed movably in the hollow portion of the guide tube, and magnets are connected to an outer peripheral surfaces of the magnet support tube so that their polarities with respect to the ferromagnetic plate are peripherally alternately different, characterized in that an area of the outer surface of the ferromagnetic plate is made to be narrower than that of the inner surface thereof, and the outer surface is biased forward in a rotational direction of the brake drum from the inner surface.

In a preferred embodiment, a shape of a side section of the ferromagnetic plates is made similarly to a parallelogram whereby even if the ferromagnetic plates are not thickened, the edge effect of the front portion in a rotational direction of a brake drum can be exhibited to reduce machining of the ferromagnetic plates prior to casting.

With respect to the shape of the side section of the ferromagnetic plates, magnetic fluxes reaching the brake drum from the magnets are concentrated on the front portions (on a rotational direction of the brake drum) of the ferromagnetic plates, and therefore, the front surface of the ferromagnetic plates is inclined forward in a rotational direction of the brake drum from the inner surface toward the outer surface of the ferromagnetic plates, and the thickness of the latter half portion of the ferromagnetic plates is made to be gradually thin to rearward. In other words, the rear surface of the ferromagnetic plates is inclined forward in a rotational direction of the brake drum from the inner surface toward the outer surface. However, when the thickness of the rear portion of the ferromagnetic plates is too thin, the effect for passing the magnetic flux becomes weakened, and the magnetic flux leaks outside when in non-braking. It is therefore preferable that the thickness of the rear portion of the ferromagnetic plates is made thinner stepwise or in a stepwise manner to prevent a leakage of magnetic flux when in non-braking.

### BRIEF DESCRIPTION OF THE DRAWINGS

These and other objects and features of the invention will become more apparent upon a perusal of the following description taken in conjunction with the accompanying drawings wherein:
FIG. 1 is a front sectional view showing a non-braking state of an eddy current reduction apparatus to which the present invention is applied.
FIG. 2 is a side sectional view showing a braking state of the eddy current reduction apparatus.
FIG. 3 is a side sectional view showing the connecting structure of the ferromagnetic plates with respect to an outer tubular portion of a guide tube in the eddy current reduction apparatus.
FIG. 4 is a plan view showing the connecting structure of the ferromagnetic plate.
FIG. 5 is a side view of another ferromagnetic plate.
FIG. 6 is a side view of a further ferromagnetic plate.
FIG. 7 is a side view of another ferromagnetic plate.
FIG. 8 is a side view of a still another ferromagnetic plate.
FIG. 9 is a perspective view showing the connecting structure of the ferromagnetic plate with respect to an outer tubular portion of a guide tube formed from a thin stainless steel plate.
FIG. 10 is a side sectional view showing the connecting structure of the ferromagnetic plates with respect to the outer tubular portion.
FIG. 11 is a side sectional view showing another connecting structure of the ferromagnetic plates with respect to the outer tubular portion.
FIG. 12 is a side sectional view showing another connecting structure of the ferromagnetic plates with respect to the outer tubular portion.
FIG. 13 is a front sectional view of a further eddy current reduction apparatus to which the present invention is applied.
FIG. 14 is a side sectional view showing a non-braking state of the eddy current reduction apparatus.
FIG. 15 is a side sectional view showing a braking state of the eddy current reduction apparatus.
FIG. 16 is a front sectional view of another eddy current reduction apparatus to which the present invention is applied.

### DESCRIPTION OF THE PREFERRED EMBODIMENTS

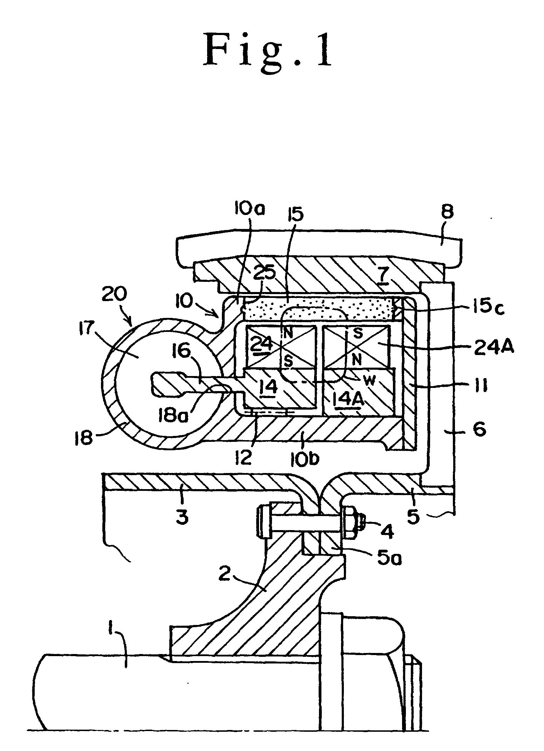

As shown in FIG. 1, the eddy current reduction apparatus according to the present invention comprises a brake drum 7 formed of a conductor connected to an output rotational shaft 1 of, for example, a speed change gear for a vehicle, a guide tube 10 formed of a non-magnetic material disposed within the brake drum 7, and a movable magnet support tube 14 and an immovable magnet support tube 14A accommodated in a hollow portion in the shape of rectangle in section of the guide tube 10. The brake drum 7 has a flange portion 5a on a boss 5. The flange portion 5a is superposed together with an end wall portion of the brake drum 3 of a parking brake on a mounting flange 2 spline-fitted and secured to the rotational shaft 1, and fastened by means of a plurality of bolts 4 and nuts. One end of the brake drum 7 provided with cooling fins 8 is connected to a number of spokes 6 extending radially from the boss 5.

The guide tube 10 in the shape of a box in section is constituted by connecting, for example, an end wall 11 formed from an annular plate to a tubular body in the shape of C in section. The guide tube 10 is secured to a gear box of, for example, a speed change gear by a suitable means. An outer tubular portion 10a of the guide tube 10 is provided with a number of openings 25 at peripherally equal intervals, and a ferromagnetic plate 15 is fitted and connected within each opening 25. Preferably, the ferromagnetic plate 15 is cast when the guide tube 10 is molded. Strictly speaking, in terms of strength, the guide tube 10 will suffice that only the outer tubular portion 10a for connecting the ferromagnetic plate 15 is formed of a non-magnetic material.

The movable magnet support tube 14, of an axial dimension about a half of the hollow portion of the guide tube 10, is formed of a magnetic material and is disposed in the hollow portion of the guide tube 10. Specifically, the movable magnet support tube 14 is supported on an inner tubular portion 10b reversibly rotatably by means of a slide bearing or a roller bearing 12. An arm 16 is extended axially and outwardly from the magnet support tube 14 via a circular slit 18a provided in the end wall of the guide tube 10 and is connected to a rod of an actuator 20. The magnet support tube 14 has magnets 24 which are opposed to a left half of each ferromagnetic plate 15 and connected to the outer peripheral surface of the magnet support tube 14 so that polarities with respect to the ferromagnetic plate 15 are different peripherally alternately.

The immovable magnet support tube 14A formed of a magnetic material also has the same number of magnets 24A as that of the magnets 24, and the magnets 24A are arranged at peripherally equal intervals similar to the magnets 24. The magnet support tube 14A is connected to the inner tubular portion 10b of the guide tube 10 by a suitable means. It is noted however that the magnet support tube 14A may be connected to the outer tubular portion 10a of the guide tube 10.

The actuator 20 connected to the left end wall of the guide tube 10 has a cylinder 18 having a piston 17 fitted therein, and a rod projecting outside from the piston 17 is connected to the arm 16.

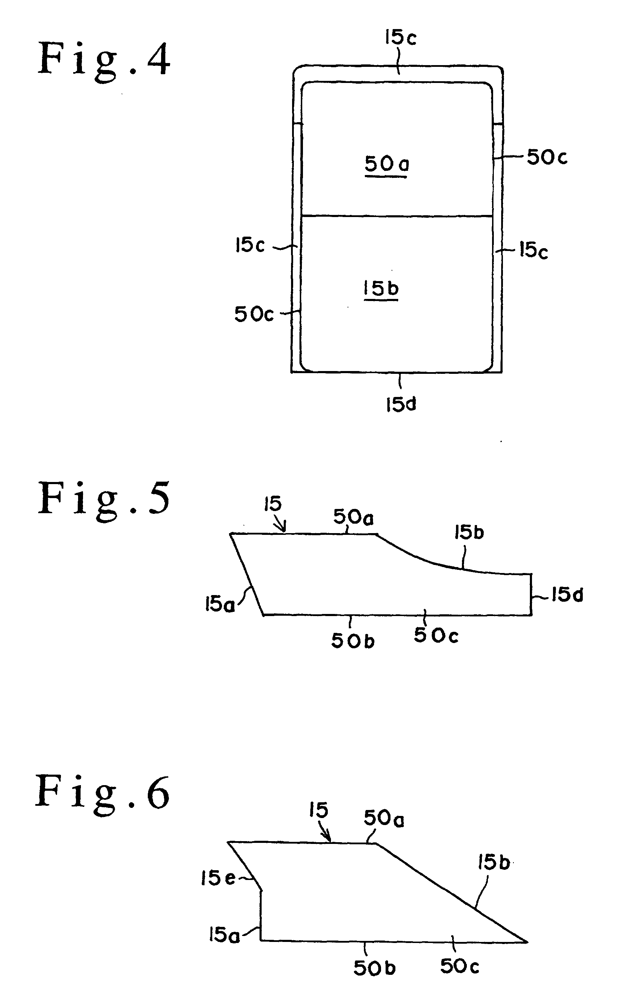

As shown in FIG. 2, the ferromagnetic plate 15 comprises an outer surface 50a of which area is narrow, an inner surface 50b of which area is wide covering an outer surface of a magnet 24, a front surface 15a, a rear surface 15b, and both sides 50c (see FIG. 4) parallel with each other. The front surface 15a is inclined in a rotational direction (in a direction indicated by an arrow y) of the brake drum 7 from the inner surface 50b toward the outer surface 50a.

As shown in FIGS. 3 and 4, actually, the ferromagnetic plate 15 is formed, in advance by forging, with a parting line 15c which surrounds the whole circumference and is inclined with respect to the plate surface, and is cast in the outer tubular portion 10a of the guide tube 10. After the guide tube 10 has been cast, the outer peripheral surface and inner peripheral surface of the outer tubular portion 10a of the guide tube 10 are finished into cylindrical surfaces by machining, as shown by chain lines 50 and 51 in FIG. 3. By this feature, a front end portion and a rear end portion of the parting line 15c are substantially removed, but both side portions of the parting line 15c remain on the both side surfaces 50c to obtain a strong connection between the outer tubular portion 10a and the ferromagnetic plate 15.

In the present invention, an area of the outer surface 50a of the ferromagnetic plate 15 opposed to the inner peripheral surface of the brake drum 7 is made to be narrower than that of the inner surface 50b opposed to the magnets 24 and 24A, unlike one similar to a conventional rectangular parallelepiped, so that a magnetic flux density from the magnets 24 and 24A toward the brake drum (the reverse is also true) is the maximum in the front end portion of the ferromagnetic plate 15 (the front portion in a rotational direction of the brake drum 7). Further, the front surface 15a of the ferromagnetic plate 15 is inclined forward in a rotational direction of the brake drum 7, and also the rear surface 15b is inclined forward in a rotational direction of the brake drum 7 so that the magnetic fluxes from the magnets 24 and 24A toward the brake drum 7 are concentrated to the front end portion of the ferromagnetic plate 15. Consequently, the ferromagnetic plate 15 is constituted in its side section into a shape close to a parallelogram. Both the side surfaces 50c of the ferromagnetic plate 15 is formed into planes which are parallel with each other and perpendicular to the rotational shaft 1 of the brake drum 7.

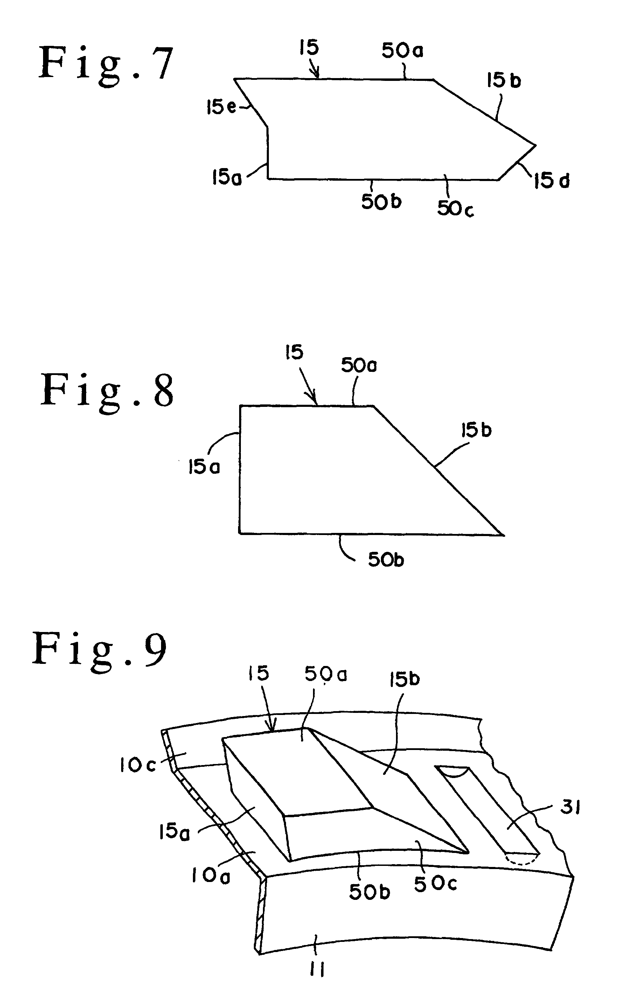

While in the embodiments shown in FIGS. 1 to 4, there is shown a simple construction in which the rear surface 15b of the ferromagnetic plate 15 is inclined in a rotational direction of the brake drum 7, it is to be noted that the outer surface 50a of the ferromagnetic plate 15 is biased forward from the inner surface 50b and the latter half of the outer surface 50a is not a simple inclined surface but can be formed into a circular rear surface 15b so that a thickness of the ferromagnetic plate 15 becomes gradually thinner backward in a rotational direction of the brake drum 7, as shown in FIG. 5. Further, the ferromagnetic plate 15 is provided with a rear surface 15d to prevent the rear surface 15d and the inner surface 50b from being crossed at an acute angle, thus obtaining a close connection with the outer tubular portion 10a. While the rear surface 15d is constituted to be a surface extending diametrically outward from the diametrically central part of the brake drum 7 in the embodiment shown in FIG. 5, it is to be noted that if the rear surface 15d inclined from the inner surface 50b rearward in a rotational direction of the brake drum 7 is crossed with the rear surface 15b inclined forward in a rotational direction of the brake drum 7 as shown in FIG. 7, closer connection with the outer tubular portion 10a of the guide tube 10 formed of aluminum can be obtained.

Further, in the embodiments shown in FIGS. 6 and 7, the front surface of the ferromagnetic plate 15 is composed of the front surface 15a substantially perpendicular to the inner surface 50b, and a front surface 15e inclined forward in the rotational direction of the brake drum 7, whereby the magnetic flux from the magnet 24 to the brake drum 7 is concentrated on the portion where the outer surface 50a and the front surface 15e are crossed. By this configuration, the magnetic flux from the magnet 24 to the brake drum 7 via the ferromagnetic plate 15 is drawn by the front end portion of the ferromagnetic plate 15 so that the magnetic flux density becomes large to generate a stronger eddy current within the brake drum 7, thus enabling enhancement of the braking ability. Further, for facilitating the disposition, the rear surface can be formed into the same shape as the rear surface 15b or a combination of the rear surface 15b and the rear surface 15d in FIGS. 5 to 7, and the front surface 15a is made to be perpendicular to the inner surface 50b, as shown in FIG. 8.

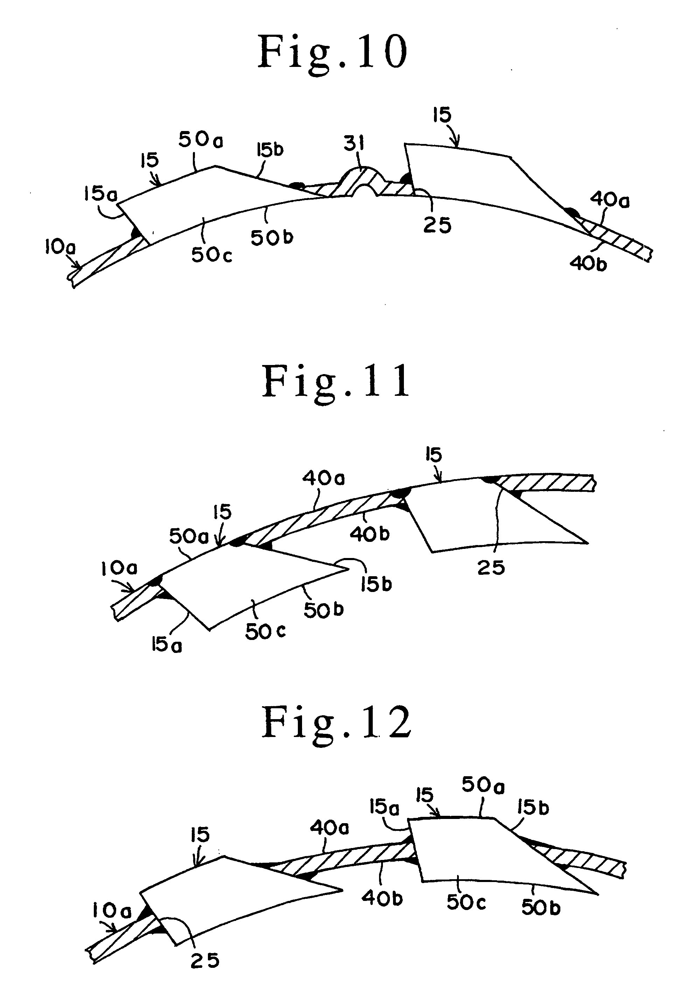

While in the foregoing, a description has been made of an embodiment in which the ferromagnetic plate 15 is cast into the outer tubular portion 10a of the hollow guide tube 10 formed of aluminum, it is to be noted that in the embodiments shown in FIGS. 9 to 12, the outer tubular portion 10a of the guide tube 10 is formed from a thin stainless steel plate. The ferromagnetic plate 15 is fitted into an opening 25 provided in the outer tubular portion 10a and connected thereto by welding or the like. Preferably, the outer tubular portion 10a is formed with an axially extending groove-shaped reinforcing rib 31. Alternately, as shown in FIG. 10, the reinforcing rib 31 can be extended radially and outwardly from an outer peripheral surface 40a of the outer tubular portion 10a.

The ferromagnetic plate 15 can be connected so that the inner surface 50b is registered with an inner peripheral surface 40b of the outer tubular portion 10a, as shown in FIGS. 9 and 10, or can be connected so that the outer surface 50a is coincided or registered with an outer peripheral surface 40a of the outer tubular portion 10a, as shown in FIG. 11. Further, the ferromagnetic plate 15 can be fitted and welded an intermediate portion between the outer surface 50a and the inner surface 50b to the opening 25 of the outer tubular portion 10a, as shown in FIG. 12.

When in non-braking, the polarities of the magnets 24 and 24A wholly opposed to the common ferromagnetic plate 15 are reversed to each other, as shown in FIG. 1. At that time, the magnets 24 and 24A form short-circuited magnetic circuits w between the ferromagnetic plate 15 and the magnet support tubes 14 and 14A and apply no magnetic field to the brake drum 7.

When in braking, the magnets 24 and 24A aligned in an axial direction and opposed to the common ferromagnetic plate 15 are the same in polarities, as shown in FIG. 2. Magnetic fields are applied to the brake drum 7 via the ferromagnetic plates 15. When the rotating brake drum 7 crosses magnetic fields, eddy currents flow into the brake drum 7, and the brake drum 7 receives the brake torque. At that time, the magnets 24 and 24A form magnetic circuits z between the brake drum 7 and the magnet support tubes 14 and 14A.

In the present invention, with respect to the ferromagnetic plate 15 supported on the outer tubular portion 10a of the guide tube 10, an area of the outer surface 50a is made to be narrower than that of the inner surface 50b, and the outer surface 50a is biased forward in a rotational direction of the brake drum 7 from the inner surface 50b. Therefore, the magnetic flux from the magnets 24 and 24A to the brake drum 7 is drawn on the front end portion of the ferromagnetic plate 15 so that strong magnetic fields reach the brake drum 7 to increase the brake force.

The eddy current reduction apparatus, above described, such constructed that a guide tube 10 formed of a non-magnetic material and having a hollow portion in the shape of a rectangle in section is disposed interiorly of a brake drum 7 connected to a rotational shaft 1, a number of ferromagnetic plates 15 are disposed at peripherally equal intervals on an outer tubular portion 10a of the guide tube 10, magnets 24 and 24A are respectively connected to outer surfaces of a movable magnet support tube 14 and an immovable magnet support tube 14A formed of a magnetic material disposed in the hollow portion of the guide tube 10 so that they are opposed to the ferromagnetic plates 15 and their polarities with respect to the ferromagnetic plates 15 are peripherally alternately different, and the movable magnet support tube 14 is reversibly rotated by a hydrawlic actuator 20 and switched to a braking position in which the magnets 24 and 24A of the same polarities are wholly opposed to the common ferromagnetic plate 15 and to a non-braking position in which the magnets 24 and 24A of the different polarities are wholly opposed to the common ferromagnetic plate 15, as shown in FIGS. 1 and 2. However, the present invention is not limited to the above described eddy current reduction apparatus and can be also applied to other type of eddy current reduction apparatuses.

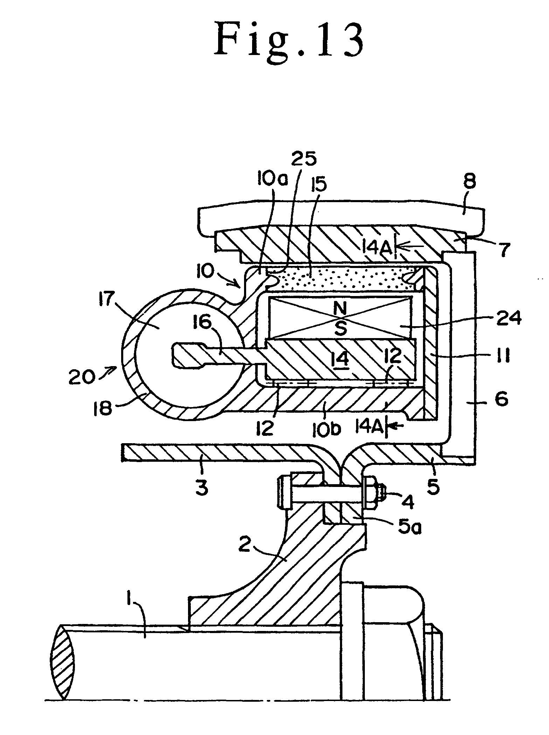

In the embodiments shown in FIGS. 13 to 15, an eddy current reduction apparatus is such constructed that a guide tube 10 formed of a non-magnetic material and having a hollow portion in the shape of a rectangle in section is disposed interiorly of a brake drum 7 connected to a rotational shaft 1, a number of ferromagnetic plates 15 are fastened at peripherally equal intervals on an outer tubular portion 10a of the guide tube 10, magnets 24 are connected to outer peripheral surfaces of a magnet support tube 14 so that the magnets 24 are opposed two by two to each ferromagnetic plate 15 and their polarities with respect to the ferromagnetic plate 15 are peripherally different two by two, and the magnet support tube 14 is formed of a magnetic material and disposed reversibly rotatably in the hollow portion of the guide tube 10 by a hydrawlic actuator 20.

An area of an outer surface 50a of each ferromagnetic plate 15 is made to be narrower than that of an inner surface 50b, the outer surface 50a is biased forward in a rotational direction of the brake drum 7 from the inner surface 50b, and a front surface 15a and a rear surface 15d of the ferromagnetic plate 15 are inclined forward in a rotational direction of the brake drum 7, as shown in FIGS. 3 to 12.

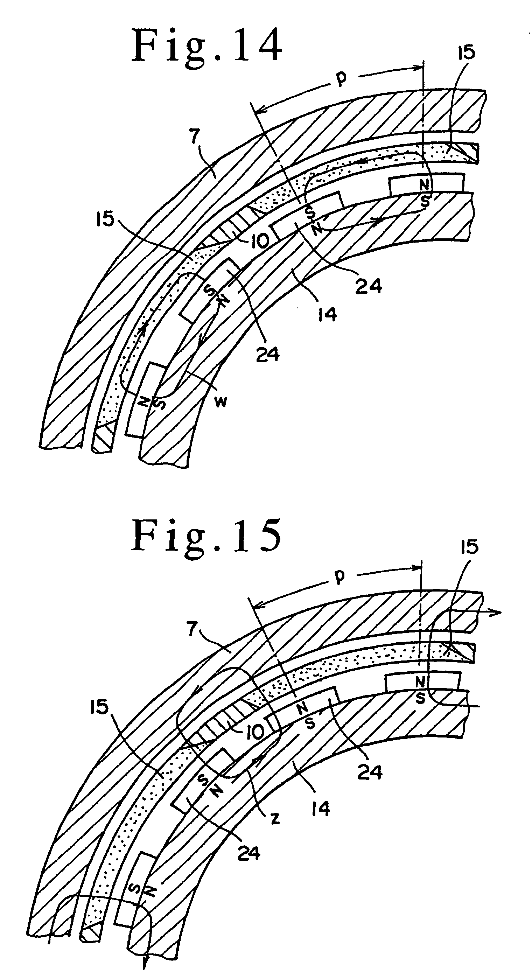

A pair of magnets 24 of the different polarities are wholly opposed to the common ferromagnetic plate 15 in a non-braking position (see FIG. 14) and a pair of magnets 24 of the same polarities are wholly opposed to the common ferromagnetic plate 15 in a braking position (see FIG. 15).

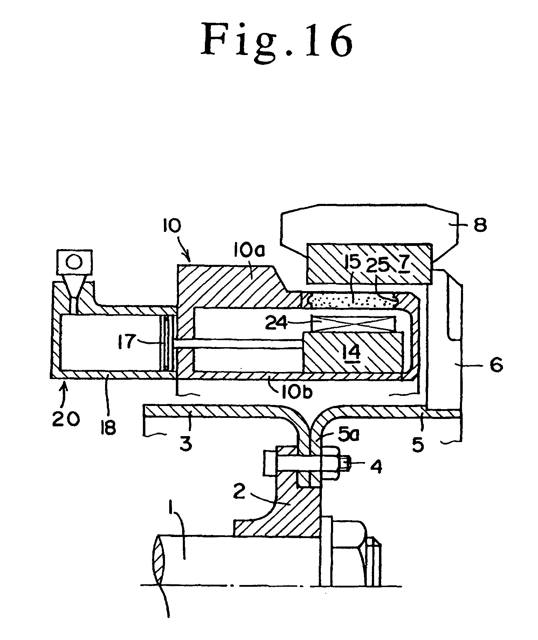

In the embodiment shown in FIG. 16, a guide tube 10 formed of a non-magnetic material and having a hollow portion in the shape of a rectangle in section is disposed interiorly of a brake drum 7 connected to a rotational shaft 1, a number of ferromagnetic plates 15 are disposed at peripherally equal intervals on an outer tubular portion 10a of the guide tube 10, magnets 24 are connected to the outer surfaces of a movable magnet support tube 14 formed of a magnetic material disposed axially movably in the hollow portion of the guide tube 10 so that their polarities with respect to the ferromagnetic plates 15 are peripherally alternately different. An area of an outer surface 50a of the ferromagnetic plate 15 is made to be narrower than that of an inner surface 50b, the outer surface 50a is biased forward in a rotational direction of the brake drum 7 from the inner surface 50b, and a front surface 15a and a rear surface 15d of the ferromagnetic plate 15 are inclined forward in a rotational direction of the brake drum 7, as shown in FIGS. 3 to 12.

When the movable magnet support tube 14 is protruded into the brake drum 7 by a hydrawlic actuator 20 to a braking position the magnets 24 are wholly opposed to the ferromagnetic plates 15 as shown in Fig. 2, and when the magnet support tube 14 is axially moved away from the brake drum 7 to a non-braking position, the magnets 24 are not opposed to the ferromagnetic plates 15.

As described above, in the present invention, an area of an outer surface 50a of the ferromagnetic plate 15 is made to be narrower than that of an inner surface 50b, the outer surface 50a is biased forward in a rotational direction of the brake drum 7, whereby the edge effect of the ferromagnetic plate 15 is enhanced, and the magnetic fluxes exerting or exercising on the brake drum 7 via the ferromagnetic plate 15 from the magnet 24 is drawn. That is, since the magnetic flux of the magnet 24 is drawn while it transmits through the ferromagnetic plate 15 and acts on the brake drum 7, the magnetic flux density on the brake drum 7 becomes large, and the eddy current generated within the brake drum 7 becomes strong to promote the brake force.

According to the present invention, as described above, a guide tube formed of a non-magnetic material and having a hollow portion in the shape of a rectangle in section is disposed interiorly of a brake drum connected to a rotational shaft, a number of ferromagnetic plates are connected at peripherally equal intervals to an outer tubular portion of the guide tube, magnets are connected to the outer surfaces of a magnet support tube supported movably in the hollow portion of the guide tube, an area of the outer surface of the ferromagnetic plate is made to be narrower than that of the inner surface of the ferromagnetic plate, and the outer surface is biased forward in a rotational direction of the brake drum from the inner surface. By this feature, the magnetic fluxes reaching to the brake drum is drawn to the front end portion of the ferromagnetic plate, thus the strong magnetic field acts on the brake drum and the braking force is increased.
- 1:: rotational shaft
- 2:: mounting flange
- 3:: brake drum
- 4:: bolt
- 5:: boss
- 5a:: flange portion
- 6:: spoke
- 7:: brake drum
- 8:: cooling fin
- 10:: guide tube
- 10a:: outer tubular portion
- 10b:: inner tubular portion
- 10c:: conical surface
- 11:: end wall
- 12:: roller bearing
- 14:: magnet support tube
- 14A:: magnet support tube
- 15:: ferromagnetic plate
- 15a:: front surface
- 15b:: rear surface
- 15c:: parting line
- 15d:: rear surface
- 15e:: front surface
- 16:: arm
- 17:: piston
- 18:: cylinder
- 18a:: slit
- 20:: actuator
- 24:: magnet
- 24A:: magnet
- 25:: opening
- 31:: reinforcing rib
- 40a:: outer peripheral surface
- 40b:: inner peripheral surface
- 50:: chain line
- 50a:: outer surface
- 50b:: inner surface
- 50c:: side surface
- 51:: chain line

## Claims

1. An eddy current reduction apparatus in which a guide tube (10) formed of a non-magnetic material and having a hollow portion in the shape of a rectangle in section is disposed interiorly of a brake drum (7) connected to a rotational shaft (1), a number of ferromagnetic plates (15) are disposed at peripherally equal intervals on an outer tubular portion (10a) of said guide tube (10), at least one of magnet support tube (14) is disposed movably in said hollow portion of said guide tube, and magnets (24,24A) are connected to an outer peripheral surfaces of said magnet support tube (14) so that their polarities with respect to said ferromagnetic plate (15) are peripherally alternately different, **characterized in that** an area of an outer surface (50a) of said ferromagnetic plate (15) is made to be narrower than that of an inner surface (50b) of said ferromagnetic plate (15), and said outer surface (50a) is biased forward in a rotational direction (y) of said brake drum (7) from said inner surface (50b).

2. An eddy current reduction apparatus in which a guide tube (10) formed of a non-magnetic material and having a hollow portion in the shape of a rectangle in section is disposed interiorly of a brake drum (7) connected to a rotational shaft (1), a number of ferromagnetic plates (15) are disposed at peripherally equal intervals on an outer tubular portion (10a) of said guide tube (10), at least one of magnet support tube (14) is disposed movably in said hollow portion of said guide tube, and magnets (24,24A) are connected to an outer peripheral surfaces of said magnet support tube (14) so that their polarities with respect to said ferromagnetic plate (15) are peripherally alternately different, **characterized in that** a front surface (15a) of said ferromagnetic plate (15) is perpendicular to the inner surface (50b) of said ferromagnetic plate or inclined forward in a rotational direction (y) of said brake drum (7) from the inner surface (50b) of said ferromagnetic plate, and a rear surface (15b) of said ferromagnetic place (15) is inclined forward in a rotational direction (y) of said brake drum (7) from the inner surface (50b) of said ferromagnetic plate (15).

3. The eddy current reduction apparatus according to any of claims 1 and 2, wherein said magnet support tubes include a movable magnet support tube and an immovable magnet support tube which are formed of a magnetic material and disposed in the hollow portion of said guide tube, said magnets are connected to the outer peripheral surface of both said magnet support tubes so that the polarities opposed to said ferromagnetic plates are peripherally alternately different, and said movable magnet support tube is reversibly rotated and switched between a braking position at which said magnets of the same polarities are wholly opposed to the common ferromagnetic plate, and a non-braking position at which said magnets of different polarities are wholly opposed to the common ferromagnetic plate.

4. The eddy current reduction apparatus according to any of claims 1 and 2, wherein said magnet support tube is disposed reversibly rotatably in the hollow portion of said guide tube, and said magnets are connected to said outer peripheral surface of said magnet support tube so that said magnets are opposed to said ferromagnetic plate two by two and the polarities with respect to said ferromagnetic plate are peripherally different two by two.

5. The eddy current reduction apparatus according to any of claims 1 and 2, wherein said magnet support tube is disposed axially movably in the hollow portion of said guide tube, said magnets are connected to the outer peripheral surface of said magnet support tube so that the polarities opposed to said ferromagnetic plates are peripherally alternately different, said magnet support tube is switched between a braking position in which said magnets are wholly opposed to said ferromagnetic plates when said magnet support tube is protruded into said brake drum and a non-braking position in which said magnets are not opposed to said ferromagnetic plates when said magnet support. tube is moved away from said brake drum.

## Patentansprüche

1. Wirbelstrom-Bremsgerät, bei welchem ein Führungsrohr (10), das aus einem nicht-magnetischen Material besteht und im Querschnitt einen hohlen Abschnitt in Form eines Rechtecks aufweist, im Inneren einer Bremstrommel (7) angeordnet ist, die mit einer Drehwelle (1) verbunden ist, wobei eine Anzahl von ferromagnetischen Platten (15) auf dem Umfang in gleichmäßigen Abständen auf einem außen liegenden rohrförmigen Abschnitt (10a) des Führungsrohres (10) angeordnet ist, wobei mindestens eines von Magnettragerohren (14) beweglich in dem hohlen Abschnitt des Führungsrohres angeordnet ist und Magnete (24, 24A) mit einer außen liegenden peripheren Fläche des Magnettragerohres (14) so verbunden sind, daß ihre Polarisierungen bezüglich der ferromagnetischen Platte (15) sich in Umfangsrichtung abwechselnd unterscheiden, **dadurch gekennzeichnet, daß** eine Fläche einer außen liegenden Fläche (50a) der ferromagnetischen Platte (15) so ausgebildet ist, daß sie schmaler ist als die einer innen liegenden Fläche (50b) der ferromagnetischen Platte (15), und daß die außen liegende Fläche (50a) in Drehrichtung (y) der Bremstrommel von der innen liegenden Fläche (50b) aus vorwärts gespannt ist.

2. Wirbelstrom-Bremsgerät, bei welchem ein Führungsrohr (10), das aus einem nicht-magnetischen Material besteht und im Querschnitt einen hohlen Abschnitt in Form eines Rechtecks aufweist, im Inneren einer Bremstrommel (7) angeordnet ist, die mit einer Drehwelle (1) verbunden ist, wobei eine Anzahl von ferromagnetischen Platten (15) auf dem Umfang in gleichmäßigen Abständen auf einem außen liegenden rohrförmigen Abschnitt (10a) des Führungsrohres (10) angeordnet ist, wobei mindestens eines von Magnettragerohren (14) beweglich in dem hohlen Abschnitt des Führungsrohres angeordnet ist und Magnete (24, 24A) mit einer außen liegenden peripheren Fläche des Magnettragerohres (14) so verbunden sind, daß ihre Polarisierungen bezüglich der ferromagnetischen Platte (15) sich in Umfangsrichtung abwechselnd unterscheiden, **dadurch gekennzeichnet, daß** eine vordere Fläche (15a) der ferromagnetischen Platte (15) senkrecht zu der innen liegenden Fläche (50b) der ferromagnetischen Platte angeordnet oder in Drehrichtung (y) der Bremstrommel (7) von der innen liegenden Fläche (50b) der ferromagnetischen Platte aus nach vom geneigt ist, und daß eine hintere Fläche (15b) der ferromagnetischen Platte (15) in Drehrichtung (y) der Bremstrommel (7) von der innen liegenden Fläche (50b) der ferromagnetischen Platte (15) aus nach vorn geneigt ist.

3. Wirbelstrom-Bremsgerät nach einem der Ansprüche 1 und 2, bei welchem die Magnettragerohre ein bewegliches Magnettragerohr und ein unbewegliches Magnettragerohr umfassen, welche aus einem magnetischen Material gebildet und in dem hohlen Abschnitt des Führungsrohres angeordnet sind, daß die Magnete mit der außen liegenden Umfangsfläche beider Magnettragerohre so verbunden sind, daß die den ferromagnetischen Platten gegenüber liegenden Polarisierungen sich in Umfangsrichtung abwechselnd unterscheiden, und bei welchem das bewegliche Magnettragerohr umkehrbar drehbar und zwischen einer Bremsposition, in welcher die Magnete gleicher Polarisierung der gemeinsamen ferromagnetischen Platte völlig entgegengesetzt , und einer Nicht-Bremsposition, in welcher die Magnete unterschiedlicher Polarisierung der gemeinsamen ferromagnetischen Platte völlig entgegengesetzt sind, umschalthar ist.

4. Wirbelstrom-Bremsgerät nach einem der Ansprüche 1 und 2, bei welchem das Magnettragerohr umkehrbar drehbar in dem hohlen Abschnitt des Führungsrohres angeordnet ist und die Magneten mit der außen liegenden Umfangsfläche des Magnettragerohres so verbunden sind, und bei welchem die Magnete jeweils paarweise der ferromagnetischen Platte gegenüber stehen und sich die Polarisierungen bezüglich der ferromagnetischen Platte jeweils paarweise in Umfangsrichtung unterscheiden.

5. Wirbelstrom-Bremsgerät nach einem der Ansprüche 1 und 2, bei welchern das Magnettragerohr axial beweglich in dem hohlen Abschnitt des Führungsrohres angeordnet ist, die Magnete mit der außen liegenden Umfangsfläche des Magnettragerohres so verbunden sind, daß die den ferromagnetischen Platten entgegengesetzten Polarisierungen sich in Umfangsrichtung abwechselnd unterscheiden, wobei das Magnettragerohr zwischen einer Bremsposition, in welcher die Magnete den ferromagnetischen Platten völlig entgegengesetzt sind, wenn das Magnettragerohr in die Bremstrommel hineinragt, und einer Nicht-Bremsposition umschaltbar ist, in welcher die Magnete den ferromagnetischen Platten nicht entgegengesetzt sind, wenn das Magnettragerohr von der Bremstrommel weg bewegt ist.

## Revendications

1. Dispositif de réduction de courant de Foucault dans lequel un tube de guidage (10) réalisé en un matériau non magnétique et comportant une partie creuse sous la forme d'un rectangle en coupe est disposé à l'intérieur d'un tambour de frein (7) relié à un arbre rotatif (1), un certain nombre de plaques ferromagnétiques (15) sont disposées à des intervalles périphériquement égaux sur une partie tubulaire extérieure (10a) dudit tube de guidage (10), au moins un tube de support d'aimants (14) est disposé de façon mobile dans ladite partie creuse dudit tube de guidage, et des aimants (24, 24A) sont reliés à une surface périphérique extérieure dudit tube de support d'aimants (14) de sorte que leurs polarités par rapport à ladite plaque ferromagnétique (15) soient différentes alternativement et périphériquement, **caractérisé en ce qu'**une aire d'une surface extérieure (50a) de ladite plaque ferromagnétique (15) est plus étroite que celle d'une surface intérieure (50b) de ladite plaque ferromagnétique (15), et ladite surface extérieure (50a) est inclinée vers l'avant dans une direction de rotation (y) dudit tambour de frein (7) par rapport à ladite surface intérieure (50L).

2. Dispositif de réduction de courant de Foucault dans lequel un tube de guidage (10) réalisé en un matériau non magnétique et comportant une partie creuse sous la forme d'un rectangle en coupe est disposé à l'intérieur d'un tambour de frein (7) relié à un arbre rotatif (1), un certain nombre de plaques ferromagnétiques (15) sont disposées à des intervalles périphériquement égaux sur une partie tubulaire extérieure (10a) dudit tube de guidage (10), au moins un tube de support d'aimants (14) est disposé de façon mobile dans ladite partie creuse dudit tube de guidage, et des aimants (24, 24A) sont reliés à une surface périphérique extérieure dudit tube de support d'aimants (14) de sorte que leurs polarités par rapport à ladite plaque ferromagnétique (15) soient différentes alternativement et périphériquement, **caractérisé en ce qu'**une surface avant (15a) de ladite plaque ferromagnétique (15) est perpendiculaire à la surface intérieure (50b) de ladite plaque ferromagnétique ou inclinée vers l'avant dans une direction de rotation (y) dudit tambour de frein (7) par rapport à la surface intérieure (50b) de ladite plaque ferromagnétique, et une surface arrière (15b) de ladite plaque ferromagnétique (15) est inclinée vers l'avant dans une direction de rotation (y) dudit tambour de frein (7) par rapport à la surface intérieure (50b) de ladite plaque ferromagnétique (15).

3. Dispositif de réduction de courant de Foucault selon l'une quelconque des revendications 1 et 2, dans lequel lesdits tubes de support d'aimants comprennent un tube de support d'aimants mobile et un tube de support d'aimants immobile qui sont réalisés en un matériau magnétique et disposés dans la partie creuse dudit tube de guidage, lesdits aimants sont reliés à la surface périphérique extérieure desdits deux tubes de support d'aimants de sorte que les polarités opposées auxdites plaques ferromagnétiques soient différentes alternativement et périphériquement, et ledit tube de support d'aimants mobile est mis en rotation de manière réversible et commuté entre une position de freinage à laquelle lesdits aimants des mêmes polarités sont entièrement opposés à la plaque ferromagnétique commune et une position de non freinage à laquelle lesdits aimants de différentes polarités sont entièrement opposés à la plaque ferromagnétique commune.

4. Dispositif de réduction de courant de Foucault selon l'une quelconque des revendications 1 et 2, dans lequel ledit tube de support d'aimants est disposé en rotation de manière réversible dans la partie creuse dudit tube de guidage, et lesdits aimants sont reliés à ladite surface périphérique extérieure dudit tube de support d'aimants de sorte que lesdits aimants soient opposés à ladite plaque ferromagnétique deux par deux et que les polarités par rapport à ladite plaque ferromagnétique soient différentes périphériquement deux par deux.

5. Dispositif de réduction de courant de Foucault selon l'une quelconque des revendications 1 et 2, dans lequel ledit tube de support d'aimants est disposé de manière mobile axialement dans la partie creuse dudit tube de guidage, lesdits aimants sont reliés à la surface périphérique extérieure dudit tube de support d'aimants de sorte que les polarités opposées auxdites plaques ferromagnétiques soient différentes alternativement et périphériquement, ledit tube de support d'aimants est commuté entre une position de freinage dans laquelle lesdits aimants sont entièrement opposés auxdites plaques ferromagnétiques lorsque ledit tube de support d'aimants fait saillie dans ledit tambour de frein et une position de non freinage dans laquelle lesdits aimants ne sont pas opposés auxdites plaques ferromagnétiques lorsque ledit tube de support d'aimants est éloigné dudit tambour de frein.
